# EUROPEAN PATENT SPECIFICATION

(11) **EP 2 342 046 B1**
(45) Date of publication and mention of the grant of the patent: **25.12.2013**
(21) Application number: 09737357.5
(22) Date of filing: 14.10.2009
(51) Int. Cl.: B23Q 17/00

(54) **METHOD FOR MONITORING THE CONTACT OF A TOOL HOLDER**
VERFAHREN ZUR ÜBERWACHUNG DES KONTAKTS EINES WERKZEUGHALTERS
PROCÉDÉ DE SUIVI DU CONTACT D'UN PORTE-OUTIL

(30) Priority: 24.10.2008 DE 102008054251
(43) Date of publication of application: 13.07.2011
(73) Proprietor: Chiron-Werke GmbH & Co. KG, 78532 Tuttlingen (DE)
(72) Inventor: HANINGER, Rudolf, 78606 Seitingen-Oberflacht (DE); PRUST, Dirk, 78532 Tuttlingen (DE); WINKLER, Hans-Henning, 78532 Tuttlingen (DE)
(74) Representative: Witte, Weller & Partner
(86) International application number: PCT/EP2009/007364
(87) International publication number: WO 2010/046046

(56) References cited:
- EP-A- 1 462 214
- EP-A- 1 938 922
- WO-A-2005/009677
- FR-A- 2 567 056

## Description

The present invention relates to a method for monitoring the contact between a bearing surface on a tool holder, preferably an SK or HSK tool holder, and a mating surface on a tool spindle of a machine tool, in which method the tool holder is drawn into the tool spindle by means of an axially displaceable clamp rod, wherein at least one distance sensor is provided which senses the current axial position of the clamp rod, and wherein an actual value dependent on the current axial position of the clamp rod is determined and used in order to make a statement about the contact, wherein an indicator sleeve having a circumferential cover surface pointing radially outwards is connected to the clamp rod, the axial position of said indicator sleeve being sensed via the at least one distance sensor.

The invention also relates to a machine tool comprising a tool spindle, into which a tool holder, preferably an SK or HSK tool holder, is drawn by means of an axially displaceable clamp rod, and a sequence control for the operation of the machine tool, wherein a bearing surface is provided on the tool holder, and this bearing surface, when the tool holder is clamped in place in the tool spindle, is in contact with a mating surface provided on the tool spindle, and at least one distance sensor is provided which senses the current axial position of the clamp rod, wherein an actual value dependent on the measured current axial position of the clamp rod is determined and used by the sequence control in order to make a statement about the contact, and wherein an indicator sleeve having a circumferential cover surface pointing radially outwards is connected to the clamp rod, the axial position of which indicator sleeve can be sensed via the at least one distance sensor.

Such a machine tool and method are known from EP 1 938 922 A1.

A machine tool known from DE 197 26 942 A1 has a tool spindle which is rotatably mounted in a spindle housing and on the front end of which a receptacle for tool holders is provided centrally.

Such tool holders are standardized as a rule; they have a steep taper or a tapered hollow shank or shaft which is designed to be complementary to the tool receptacle in the spindle. Adjoining the steep taper or hollow shaft taper at the bottom thereof is a thickened collar on which a gripper groove for an automatic tool changer is provided. Running below the collar is a retaining shank, to which tools can be fastened.

On the side of the tapered hollow shank, a bearing surface is provided on the thickened collar, and this bearing surface, when the tool holder is clamped in place in the tool receptacle, comes into full-face contact, that is to say into contact with a mating surface which is provided on the front end of the tool spindle.

In this case, the HSK tool holder is drawn into the tool receptacle via a draw rod which acts on the tapered hollow shank, the conical cover surface of the tapered hollow shank being restrained against the conical cover surface of the tool receptacle.

The true-to-size or fitted seating of the HSK tool holder in the tool receptacle is effected via the full-face contact between the bearing surface and the mating surface. It can easily be seen that chips of any type which reach the bearing surface and/or the mating surface during the tool change adversely affect the full-face contact and thus the correct seating of the tool holder in the tool receptacle. In an SK (steep taper) tool holder, the fitted seating is ensured by contact between the tapered surface of the SK tool holder and the internal tapered surface of the tool receptacle, which act as bearing surface and mating surface in the sense of the present application.

A metal chip which has got between bearing surface and mating surface can therefore result in the tool holder being unable to be drawn completely into the tool receptacle or in the axis of the tool holder not being in alignment with the axis of rotation of the tool spindle, such that the tool does not run concentrically, but rather wobbles.

Such clamping faults impair the accuracy with which the known machine tool can machine workpieces. The metal chips can easily attain dimensions of many hundred micrometers; but it is also possible for metal chips to lead to a clamping fault of 10 µm or less.

However, since the known machine tool is provided for precision machining in which the surfaces are machined with an accuracy of 10 µm or less, such a metal chip therefore inevitably leads to a poor work result and possibly even to rejects.

In order to improve the machining accuracy of the known machine tool, it is proposed in DE 197 26 942 to flush the tool holder with coolant, when introducing the tool holder into the tool receptacle or removing it therefrom as replacement, in order thus to prevent metal chips from coming to lie on the tool holder, in particular on the bearing surface thereof.

However, it has been found that, despite the great success that can be achieved by the flushing of the tool holder when introducing or removing it as replacement, the possibility of metal chips adhering on the bearing surface or on the mating surface on the tool spindle cannot be completely ruled out in rare cases, said metal chips then disturbing the contact and leading to poor work results.

Against this background, there is therefore a need to monitor the quality of the contact between the bearing surface on the tool holder and the mating surface on the tool spindle in order to emit an alarm signal in the event of faulty contact, such that automatic or manual measures can be initiated in order to clean the front end of the tool spindle before the machining of the clamped workpiece is continued.

Known to the applicant of the present invention are machine tools in which the full-face contact is checked via "dynamic pressure sensing". In this dynamic pressure sensing, a design feature of a certain machine tool is utilized in which compressed air passages open out in the mating surface at the front end of the tool spindle in order to be able to blow free the tool holder with compressed air during the tool change. If the tool holder is completely clamped in place in the tool receptacle, these compressed air passages are closed by the close contact, that is to say the full-face contact between bearing surface and mating surface, such that compressed air can no longer escape from the passages. The pressure building up in the process is recorded as a measure of the quality of the full-face contact. It is disadvantageous here that only a low measuring speed is reached despite high peripheral design efforts.

In view of the requirements imposed on modern machine tools with regard to accuracy and speed, the measuring accuracies and/or speeds attainable in the prior art are inadequate.

In order to obviate this problem, DE 199 37 447 A1 proposes to detect the current axial position of the clamp rod and to determine an actual value in order to be able to make a statement about the contact. The design is selected there in such a way that a measuring disc is fastened to that end of the clamp rod which projects upwards beyond the work spindle, and provided above said measuring disc is an eddy current sensor which detects the axial distance from the measuring disc and determines therefrom the axial displacement of the clamp rod.

In this way, the contact of the tool holder is supposed to be monitored without an appreciable loss of time.

In the known arrangement, however, it is disadvantageous firstly that an expensive sensor is used and secondly that the sensor has to be arranged inside the work spindle, since of course it measures in the axial direction.

EP 1 938 922 A1, mentioned at the outset, discloses a machine tool and method dealing with the problem of chips that may deposit on mating surfaces of the tool holder and the tool spindle, respectively.

To this end, the machine tool comprises an analogue proximity sensor mounted in a stationary position in the machine tool and interacting with a conical surface that is coaxial and integral with the clamp rod. Thus, the sensor can sense the actual position of the clamp rod by measuring the distance from the conical surface, and can provide information on the quality of the clamping condition of a tool holder in the tool spindle.

On account of the conversion of the axial movement into a radial or normal change in distance, it is necessary to use a distance sensor having a very high measuring accuracy and resolution.

A similar system and method with similar disadvantages is known from EP 1 462 214 A1.

Another system and method for detecting the position of the clamp rod in an automatic tool changing device is known from WO 2005/009677 A1. In the known machine tool, the clamp rod comprises a rear extension provided with a core made of a magnetic member having high magnetic permeability. Around this core, a coil section is aligned having a hollow cylindrical shape, whereby an inductance value of the coil section varies depending on the position of the core within the coil section. An LC oscillator is connected to the coil section so as to generate a frequency signal which varies depending on the inductance value of the coil section which in turn is influenced by the axial position of the core and thus of the clamp rod.

Thus, the determination of the axial position of the clamp rod depends on the measurement of frequency changes which is not only complicated and less reliable, the construction is further involved and needs a lot of space within the machine tool.

In view of the above, it is an object of the present invention to improve the machine tool and the method of the type mentioned at the outset in such a way that the contact can be monitored with a high accuracy and speed at low design efforts.

In the method mentioned at the outset, this object is achieved according to the invention in that the indicator sleeve has a cylindrical cover surface, and the actual value is determined as a function of an overlap of the distance sensor by the cover surface.

In the machine tool mentioned at the outset, this object is achieved in that the indicator sleeve has a cylindrical cover surface, and the distance sensor measures its overlap by the cover surface, such that the measured value can be determined as a function of the overlap of the distance sensor by the cover surface.

This and other objects underlying the invention are completely achieved in this way.

According to the invention, an actual value for the axial position of the clamp rod can be determined, and a statement about the quality of the contact between bearing surface and mating surface can be derived from said actual value.

In this case, it is advantageous that measurements especially do not have to be taken directly at the clamp rod or in the axial direction relative to the clamp rod, but rather that, depending on the geometry, the indicator sleeve can also be arranged outside the spindle shaft, in which case it can then be connected to the clamp rod, for example, via the transverse pin which is used anyway and via which the clamp rod can be pressed downwards for releasing a tool holder, as is generally known.

In other words, an indicator sleeve can be used here which has a circumferential cover surface which points radially outwards and which can therefore be located outside the work spindle, where it can be detected by measurement in a considerably easier manner than in the interior of the work spindle itself.

Furthermore, the stroke of the signal rod, which stroke is required for drawing in the tool holder, varies as a function of various operating situations of the machine tool. Thus, for example, a smaller stroke may be required for the complete clamping of a tool holder in a cold machine tool than in a machine tool which is at operating temperature.

Now, the inventors of the present application have recognized that the axial position, measured via the cover surface of the indicator sleeve, of the clamp rod can be used for evaluating the contact if, for example, the operating situation and/or the individual stroke of the clamp rod for a certain tool holder is taken into account.

With the method and machine tool of the invention, it is advantageous that a relatively simple and inexpensive distance sensor can be used, the measuring surface of which is directed radially inwards and extends parallel to the axial displacement of the clamp rod and thus parallel to the longitudinal extent of the cylindrical cover surface.

The inventors of the present application have recognized, that with such a distance sensor, overlaps of the active surface of the distance sensor by the cover surface of the indicator sleeve can be detected very sensitively with such a high accuracy that deviations in the full-face contact which are caused by metal chips can be recognized, which metal chips can have axial dimensions of 40 µm and also considerably less.

In this way, it is thus possible to be able to make very reliable and highly accurate statements about the quality of the contact using a very inexpensive sensor and a very simple measuring system.

Sensors which can be used in this connection are the analog displacement sensor BAW M12MF2-UAC40F-BP00,5-GS04 or comparable sensors from Messrs Balluff, D-73761 Neuhausen.

It is generally preferred in this case if a zero value for an individual axial zero position of the clamp rod is determined for each tool holder, and if an evaluation of the contact is derived from the zero value and the actual value, wherein the zero value is preferably determined for each respective tool holder when it is first clamped in place in the machine tool with faultless contact.

Here, it is advantageous that an individual zero position of the clamp rod, as it were, is determined for each tool holder. In this way, the tolerances in the individual tool holders can therefore be taken into account.

For each tool holder, a zero value for its zero position is now stored in the sequence control, with which zero position the respective actual value is compared. If the deviation between the zero value and the actual value is below a certain threshold value, the full-face contact is evaluated as good, and the sequence control continues with the machining process. On the other hand, if the deviation is above the threshold value, a fault signal is emitted and the further machining process is stopped until automatic or manual cleaning is effected.

In this case, it is preferred if, to determine the zero value, the faultless contact is determined via a measuring system which checks a machining tool, carried by the clamped tool holder, in particular for its length, position, concentricity or possible wobbling.

Here, it is advantageous that, when clamping a tool holder in place in the machine tool for the first time, the zero position of the clamp rod does not have to be confirmed manually but rather that this can be done via a measuring system possibly present anyway. After the first clamping of the tool holder, this measuring system, which may be a laser light barrier for example, checks the machining tool for its length, for example, which length is likewise stored in the sequence control since it is required for the high-precision machining.

If the measured length does not correspond to the stored length, this means that there is a fault in the contact, such that no zero value can be determined, but rather the machining process has to be stopped.

Instead of the length, the machining tool can also be checked for its position, for example tilting, for the concentricity or also for possible wobbling.

It is generally preferred if a contact is evaluated as faultless if the difference between the actual value and a nominal value derived from the zero value and/or an actual value determined beforehand during faultless contact is less than a predetermined threshold value.

With this measure, it is advantageous that the contact is checked not only individually for each tool holder but that different operating states of the machine tool can also be taken into account. This is, because a general change in the zero contact due to thermal effects can be taken into account if the nominal value is also determined or is solely determined by an actual value determined beforehand during faultless contact.

It is thus possible, for example, for the zero position for faultless contact to shift upwards in the course of the operation because the clamp rod expands due to the thermal heating. This may result in the difference between the original zero value and the current actual value being greater than the threshold value after repeated tool change, despite faultless contact, such that a contact that is not faultless would be mistakenly indicated. If either the respective next actual value for faultless contact is now included in the calculation of the nominal value or if else in each case the last actual value for faultless contact is taken as a new zero value, these thermal deflections in the machine tool can be taken into account in a simple manner.

In the simplest case, however, it is preferred if the nominal value is the zero value.

This is because it has been found that it suffices in many cases to individualize the novel method with respect to the tool holders, but that it is not necessary to take into account thermal deflections and other operating states.

On the other hand, it is preferred if the nominal value is derived from the zero value and at least one actual value determined beforehand during faultless contact.

Here, it is advantageous that the nominal value is derived both from the zero value when the tool holder is first clamped in place in a faultless manner and from ensuing actual values for faultless contact, so that the nominal value is prevented from diverging from the zero value to such an extent that pronounced changes in the operating temperature, for example after a lunch-break and corresponding cooling, may lead to a fault being mistakenly indicated.

Here, it is thus possible, for example, to calculate a type of moving average for the nominal value, in which moving average both the zero value and all the or some of the preceding actual values for faultless contact are included.

In the novel machine tool, it is accordingly preferred if the indicator sleeve has a circumferential cylindrical cover surface pointing radially outwards, and the sensor measures its overlap by the cover surface, such that the measured value can be determined as a function of the overlap of the sensor by the cover surface.

The advantages associated with these measures have also already been described above. A sensor can be used which points radially inwards with its measuring surface, such that it can be attached at a location which geometrically does not disturb the other components of the machine tool. The cylindrical cover surface permits the use of a simple and thus inexpensive sensor.

It is generally also preferred if a measuring system is provided which measures a machining tool carried by the clamped tool holder, in particular its length, position, concentricity or possible wobbling.

It is advantageous here that such a measuring system known per se can be used in order to recognize a faultless contact when a tool holder is clamped in place in the tool receptacle for the first time, such that the actual value of the axial position of the clamp rod can be stored as zero value for this individual tool holder.

It may also be mentioned here that this measuring system could certainly also be used to recheck the contact during every tool change. For this purpose, however, it is necessary for the tool spindle to move the cutting tool to the measuring system, which as a rule is a laser light barrier, as described, for example, in DE 42 38 504 A1.

However, these additional travel movements take time, such that they reduce the chip-to-chip time which is required in order to disengage a tool from the machined workpiece, to exchange the tool for a new tool and to bring said new tool into engagement with the workpiece again. However, a reduction in the chip-to-chip time means a reduction in the machining operations possible per unit time, such that the efficiency is adversely affected.

The advantage with the novel method and with the novel machine tool now lies just in the fact that, directly after a tool holder is clamped in place in the tool receptacle, a statement about the quality of the contact is available from the actual value for the axial position of the clamp rod, said actual value also being used here in order to indicate the effected clamping, such that neither further measurements, such as with the dynamic pressure sensing for example, nor further travel measures, as in connection with the additional measuring systems, are necessary in order to derive the statement about the contact and to be able to continue the machining process.

The novel method and the novel machine tool therefore not only ensure the high machining accuracy, they also make possible a quick tool change and therefore a high throughput of workpieces to be machined.

Further advantages follow from the description and the attached drawing. It goes without saying that the abovementioned features and the features still to be explained below can be used not only in the respectively specified combination but rather also in other combinations or on their own without departing from the scope of the present invention.

Embodiments of the invention are shown in the drawing and are described in more detail below. In the drawing:
- Fig. 1: shows, in schematic side view and in longitudinal section, a machine tool on which the novel method can be carried out;
- Fig. 2: shows a detailed illustration of the spindle housing, of the tool spindle and of the tool holder from Fig. 1 in a partly sectioned illustration (not true to scale and not belonging to the invention), wherein an indicator sleeve having a conical cover surface is used;
- Fig. 3: shows an illustration like Fig. 2 but with a tool holder completely drawn into the tool receptacle;
- Fig. 4: shows the top region of the spindle housing as in Fig. 2, but according to the invention with an indicator sleeve having a cylindrical cover surface; and
- Fig. 5: shows an illustration like Fig. 4 but with a tool holder completely drawn into the tool receptacle.

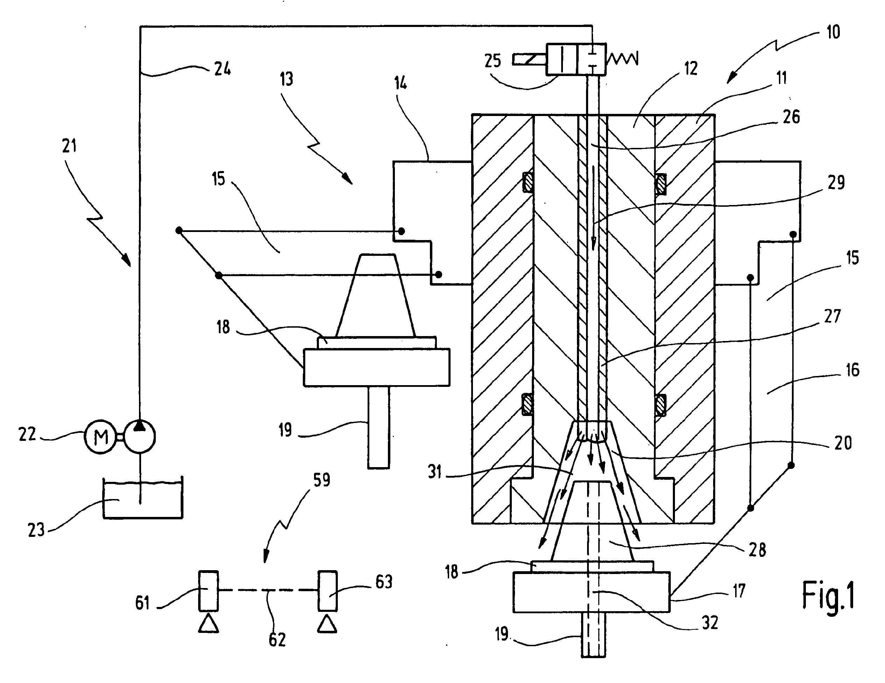

Schematically shown in Fig. 1 is a machine tool 10 which has a spindle housing 11 in which a tool spindle 12 is rotatably mounted.

The machine tool 10 comprises a tool-changing device 13 which comprises a changer head 14 which is arranged on the spindle housing 11 in a vertically displaceable manner and is also called a sleeve. Provided on the changer head 14 are a plurality of tool changers 15, of which two are shown schematically in Fig. 1.

Each tool changer 15 comprises a parallelogram linkage 16 which carries a gripper hand 17. Arranged in each gripper hand 17 is a tool holder 18, to which a machining tool 19 is fastened, which in each case is only shown schematically.

The left-hand tool changer 15 in Fig. 1 has swung the tool holder 18 carried by it up into its magazine position, whereas the right-hand tool holder 15 has swung the tool holder held by it under a tool receptacle 20 which is provided centrally in the tool spindle 12. If the sleeve 14 in Fig. 1 is now pushed upwards, the tool holder 18 passes into the tool receptacle 20 and is then located in its working position.

In principle, the machine tool 10 may also be configured with any other tool magazine in which SK and HSK tool holders, which can be introduced automatically as replacements into the tool receptacle 20, are stored.

In the machine tool 10 described to this extent, an internal cooling system 21 is provided, which comprises a pump 22 which pumps coolant from a coolant tank 23 through a feed line 24 to the machine tool 10. Also provided in the feed line 24 is a stop valve 25, via which the internal cooling system 21 can be switched on and off.

Adjoining the stop valve 25 is an internal passage 26 which passes centrally through a clamp rod 27 provided centrally in tool spindle 12 and opens out at the bottom in tool receptacle 20, under which, in Fig. 1, tool holder 18 with its taper 28 sits.

If the internal cooling system 21 is now switched on by actuating stop valve 25, coolant flows in the direction of an arrow 29 through internal passage 26 and discharges at the bottom as flushing jet 31, which frees taper 28 of adhering chips on the outside before it is clamped in place in tool receptacle 20.

In the embodiment according to Fig. 1, taper 28 is shown as a conventional steep taper, which is drawn into tool receptacle 20 by clamp rod 27 in a manner known per se. If tool holder 18, which is designed here as an SK tool holder, has thus been clamped in place in tool receptacle 20, the coolant flows from internal passage 26 into a bore 32 of tool holder 18, from where it spreads through small passages (not shown) into machining tool 19 in order to cool the latter from the inside.

When a tool 18 is introduced as replacement, this machine tool is now operated in such a way that the internal cooling system 21 is switched on at least temporarily when a new tool holder 18 is inserted with its steep taper 28 into tool receptacle 20. The flushing jet 31 produced in the process firstly cleans the tool receptacle from the inside and secondly flushes adhering chips from the outer surface of steep taper 28 and from the thickened collar of tool holder 18.

Such a machine tool is known, for example, from DE 197 26 952 A1.

It has now transpired that it cannot always be ensured even by the spray jet 31 that all the chips are flushed from the tool receptacle 20 and from the tool holder 18, for which reason faults occasionally occur in the contact between the outer surface of steep taper 28 and the tapered inner surface of tool receptacle 20 when tool holder 18 is clamped in place in tool receptacle 20.

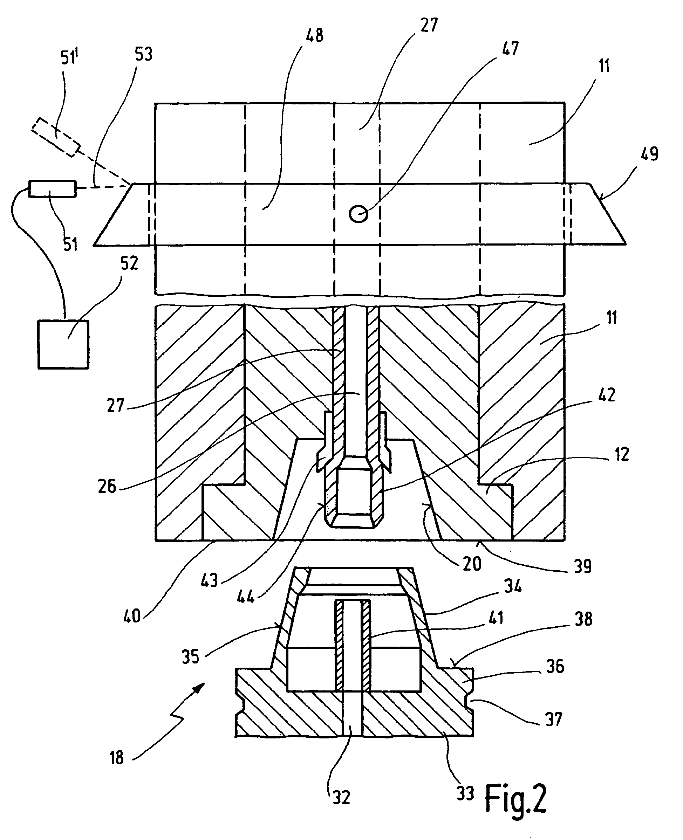

This is now prevented by measures which are to be explained in connection with Fig. 2.

It can first of all be seen in Fig. 2 that tool holder 18 here is designed as an "HSK tool holder" 33 which has a hollow shank taper 34, the tapered outer surface 35 of which is adapted to the tapered surface of tool receptacle 20.

Adjoining hollow shank taper 34 at the bottom is a thickened collar 36 in which an outer circumferential gripper groove 37 is provided, at which gripper hand 17 takes hold of tool holder 34.

Provided at the top on thickened collar 36 and pointing in Fig. 2 towards tool spindle 12 is a bearing surface 38, to which a mating surface 39 at a front end 40 of tool spindle 12 is assigned. When HSK tool holder 33 is drawn into tool receptacle 20, bearing surface 38 comes into full-face contact with mating surface 39, provided no metal chips or other contaminants have collected on bearing surface 38 and/or mating surface 39 which could not be removed by spray jet 31.

A conventional coolant tube 41 is also shown in hollow shank taper 34, said coolant tube 41 engaging in a clamping spigot 42, provided at the bottom on clamp rod 27, when HSK tool holder 33 is moved upwards in Fig. 2. Also shown in Fig. 2 bearing against clamping spigot 42 are conventional collets 43 which, when clamp rod 27 is drawn up in Fig. 2, come into contact with a circumferential surface 44 of clamping spigot 42 and are moved outwards by said circumferential surface 44 in such a way that they engage in a shoulder 45 which is provided on the inside on hollow shank taper 34.

In this manner known per se, HSK tool holder 33 is drawn into tool receptacle 20 and is connected there to tool spindle 12 in a rotationally fixed manner.

The top end of the spindle housing 11 and of the tool spindle 12 are shown unsectioned and in a highly schematic manner at the top in Fig. 2, where an indicator sleeve 48 having a circumferential conical cover surface 49 pointing radially outwards is connected to clamp rod 27 via a transverse pin 47. In this way, the indicator sleeve 48 follows the clamp rod 27 upwards during its axial displacement in Fig. 1.

A sensor 51 which is connected to a sequence control 52 for the machine tool is provided for monitoring the position of indicator sleeve 48. The sensor 51 is a distance sensor which measures, radially inwards, a distance, indicated at 53, from conical cover surface 49. Alternatively, sensor 51 may also be oriented normal to cover surface 49, as shown by broken lines at 51' in Fig. 2.

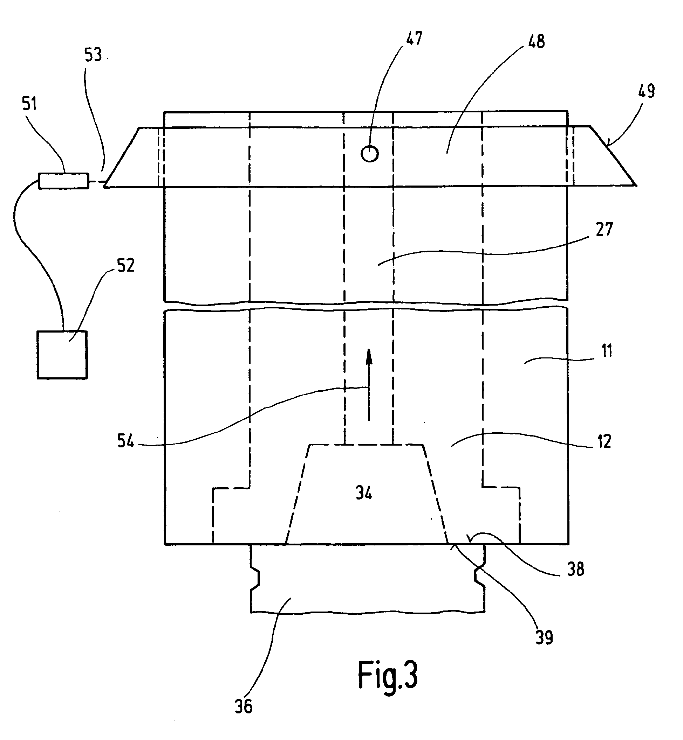

If, as already described, HSK tool holder 33 is inserted into tool receptacle 20 and is restrained there by clamp rod 27 being pulled up, indicator sleeve 48 also moves upwards. This state with clamped HSK tool holder 33 is shown in Fig. 3.

The indicator sleeve 48 has now moved upwards to such an extent that sensor 51 measures a markedly smaller distance 53 from the conical cover surface 49. In the sequence control 52, the current stroke of clamp rod 27 in the direction of an arrow 54 is calculated via the opening angle of conical cover surface 49 and the distance change 53 and an actual value for the current axial position of clamp rod 27 is determined therefrom.

This actual value is now compared with a nominal value for the axial position of clamp rod 27 and the individual HSK tool holder 33. If the difference between the actual value and the nominal value is below a threshold value likewise stored in the sequence control, the full-face contact between bearing surface 38 and mating surface 39 is evaluated as faultless, such that the sequence control continues with the next operation. On the other hand, if the difference lies above the threshold value, a fault signal is emitted, and the sequence control changes to an operating state in which operating personnel can ensure the correct full-face contact.

The nominal value for the individual HSK tool holder 33 is obtained from the zero value for the first clamping of HSK tool holder 33 with faultless full-face contact and from ensuing actual values for faultless full-face contact like a moving average. In this way, thermal expansions of the clamp rod and similar changes in the operating state are taken into account when evaluating the full-face contact.

In order to also be able to detect slight deviations in the full-face contact between bearing surface 38 and mating surface 39 by means of sensor 51 and while using conical cover surface 49, sensor 51 must work with high accuracy and high resolution.

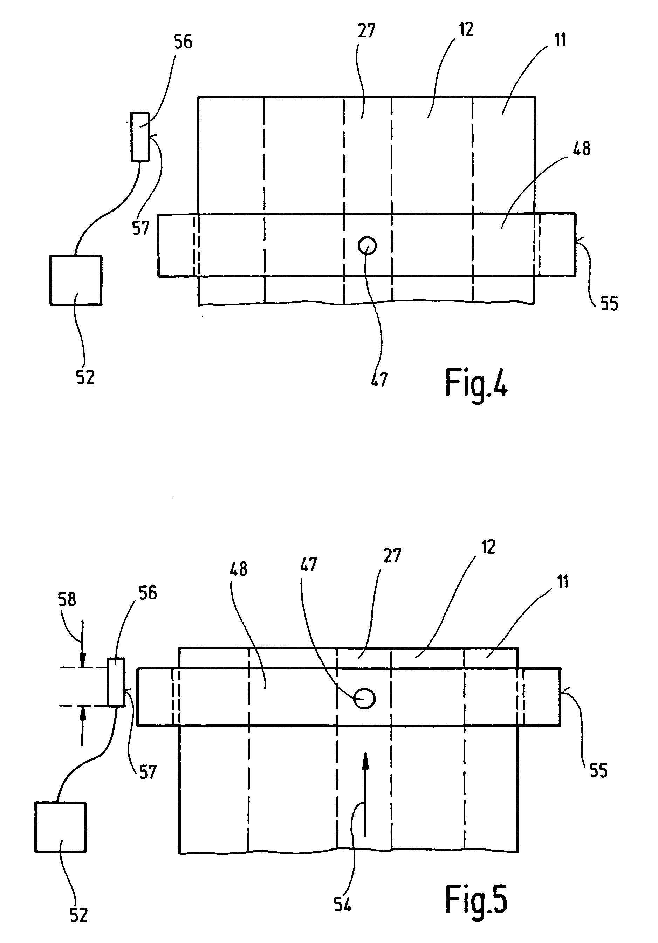

A less expensive design is provided by the invention and is shown in Fig. 4, where only the top section of the spindle housing 11 is schematically shown.

The indicator sleeve 48 now has a circumferential cylindrical cover surface 55 pointing radially outwards. Assigned to this cover surface 55 is a sensor 56, the measuring surface 57 of which points radially inwards and extends parallel to the longitudinal axis of the clamp rod 27.

In Fig. 4, indicator sleeve 48 is located in its bottom position, which corresponds to the position of the clamp rod from Fig. 2. When a tool holder is drawn into the tool receptacle, the indicator sleeve 48 passes into the position shown in Fig. 5, wherein its cover surface 55 at least partly overlaps the measuring surface 57 of sensor 56. This overlap is indicated by a distance 58 in Fig. 5.

It has now been found that the overlap 58 leads to a signal from sensor 56, from which an actual value for the axial position of clamp rod 27 can be calculated in a highly precise manner. Here, a relatively inexpensive sensor 56 may be used, which in the simplest case is likewise a distance sensor but which, on account of the greater signal change during different overlaps 58, may have a lower dimensional accuracy and resolution than sensor 51 with which the radial distance 53 is measured.

The sensor used is, for example, the analog displacement sensor BAW M12MF2-UAC40F-BP00,5-GS04 mentioned at the outset.

Compared with the design from Figures 2 and 3, the design according to Figures 4 and 5 has the advantage that a simple and thus inexpensive sensor 56 can be used, which nonetheless permits a highly precise measurement of the actual value of the axial position of clamp rod 27, such that faults in the full-face contact can be recognized which are caused by metal chips which have dimensions considerably less than 100 µm in the axial direction.

In order to be able to detect by measurement a faultless contact or full-face contact during the initial introduction of a tool holder as replacement into the tool spindle, a measuring system 59 is also shown in Fig. 1, said measuring system 59 comprising a laser 61 which emits a fanned laser beam 62 which is detected by a sensor 63. The cutting tool 19 is plunged into the laser beam 62 by moving the spindle housing 11, as a result of which concentricity, position or wobbling can be recognized. Furthermore, it is possible to plunge cutting tool 19 into laser beam 62 from above and thus determine the length of the cutting tool 19.

## Claims

1. Method for monitoring the contact between a bearing surface (38) on a tool holder (18, 33), preferably an SK or HSK tool holder (33), and a mating surface (39) on a tool spindle (12) of a machine tool (10), in which method the tool holder (18, 33) is drawn into the tool spindle (12) by means of an axially displaceable clamp rod (27), wherein at least one distance sensor (56) is provided which senses the current axial position of the clamp rod (27), and wherein an actual value dependent on the current axial position of the clamp rod (27) is determined and used in order to make a statement about the contact, wherein an indicator sleeve (48) having a circumferential cover surface (55) pointing radially outwards is connected to the clamp rod (27), the axial position of said indicator sleeve (55) being sensened via the at least one distance sensor (56), **characterized in that** the indicator sleeve (48) has a cylindrical cover surface (55), and the actual value is determined as a function of an overlap (58) of the distance sensor (56) by the cover surface (55).

2. Method according to Claim 1, **characterized in that** a zero value for an individual axial zero position of the clamp rod (27) is determined for each tool holder (18, 33), and **in that** an evaluation of the contact is derived from the zero value and the actual value.

3. Method according to Claim 2, **characterized in that** the zero value is determined for each respective tool holder (18, 33) when it is first clamped in place in the machine tool (10) with faultless contact.

4. Method according to Claim 3, **characterized in that**, to determine the zero value, the faultless contact is determined via a measuring system (59) which checks a cutting tool (19), carried by the clamped tool holder, in particular for its length, position, concentricity or possible wobbling.

5. Method according to anyone of Claims 2 to 4, **characterized in that** a contact is evaluated as faultless if the difference between the actual value and a nominal value derived from the zero value and/or an actual value determined beforehand during faultless contact is less than a predetermined threshold value.

6. Method according to Claim 5, **characterized in that** the nominal value is the zero value.

7. Method according to Claim 5, **characterized in that** the nominal value is derived from the zero value and at least one actual value determined beforehand during faultless contact.

8. Machine tool comprising a tool spindle (12), into which a tool holder (18, 33), preferably an SK or HSK tool holder (33), is drawn by means of an axially displaceable clamp rod (27), and a sequence control (52) for the operation of the machine tool (10), wherein a bearing surface (38) is provided on the tool holder (33), and this bearing surface (38), when the tool holder (33) is clamped in place in the tool spindle (12), is in contact with a mating surface provided on the tool spindle (12), and at least one distance sensor (56) is provided which senses the current axial position of the clamp rod (27), wherein an actual value dependent on the measured current axial position of the clamp rod (27) is determined and used by the sequence control (52) in order to make a statement about the contact, and wherein an indicator sleeve (48) having a circumferential cover surface (55) pointing radially outwards is connected to the clamp rod (27), the axial position of which indicator sleeve (55) can be sensened via the at least one distance sensor (56)
**characterized in that** the indicator sleeve (48) has a cylindrical cover surface (55), and the distance sensor (56) measures its overlap (58) by the cover surface (55), such that the measured value can be determined as a function of the overlap (58) of the distance sensor (56) by the cover surface (55).

9. Machine tool according to Claim 8, **characterized in that** a measuring system (59) is provided which measures a machining tool (19) carried by the clamped tool holder (18, 33), in particular its length, position, concentricity or possible wobbling.

## Patentansprüche

1. Verfahren zur Überwachung der Anlage zwischen einer Auflagefläche (38) an einem Werkzeughalter (18, 33), vorzugsweise einem SK- oder HSK-Werkzeughalter (33), und einer Gegenfläche (39) an einer Werkzeugspindel (12) einer Werkzeugmaschine (10), bei dem der Werkzeughalter (18, 33) mittels einer axial verstellbaren Spannstange (27) in die Werkzeugspindel (12) eingezogen wird, wobei zumindest ein Abstandssensor (56) vorgesehen ist, der die aktuelle axiale Lage der Spannstange (27) abfragt, und wobei ein von der aktuellen axialen Lage der Spannstange (27) abhängiger Ist-Wert ermittelt und verwendet wird, um eine Aussage über die Anlage zu treffen, wobei mit der Spannstange (27) eine Meldehülse (48) mit einer radial nach außen weisenden, umlaufenden Mantelfläche (55) verbunden ist, deren axiale Lage über den zumindest einen Sensor (56) abgefragt wird, **dadurch gekennzeichnet, dass** die Meldehülse (48) eine zylindrische Mantelfläche (55) aufweist, und der Ist-Wert in Abhängigkeit von einer Überdeckung (58) des Sensors (56) durch die Mantelfläche (55) ermittelt wird.

2. Verfahren nach Anspruch 1, **dadurch gekennzeichnet, dass** für jeden Werkzeughalter (18, 33) ein Null-Wert für eine individuelle axiale Null-Lage der Spannstange (27) ermittelt wird, und dass aus dem Null-Wert und dem Ist-Wert eine Bewertung der Anlage abgeleitet wird.

3. Verfahren nach Anspruch 2, **dadurch gekennzeichnet, dass** für jeden jeweiligen Werkzeughalter (18, 33) bei dessen erstem Einspannen in die Werkzeugmaschine (10) mit fehlerfreier Anlage der Null-Wert ermittelt wird.

4. Verfahren nach Anspruch 3, **dadurch gekennzeichnet, dass** zur Ermittlung des Null-Wertes die fehlerfreie Anlage über ein Messsystem (59) ermittelt wird, das ein von dem eingespannten Werkzeughalter getragenes Bearbeitungswerkzeug (19) überprüft, insbesondere auf dessen Länge, Lage, Rundlauf, oder mögliches Taumeln.

5. Verfahren nach einem der Ansprüche 2 bis 4, **dadurch gekennzeichnet, dass** eine Anlage als fehlerfrei bewertet wird, wenn die Differenz zwischen dem Ist-Wert und einem aus dem Null-Wert und/oder einem zuvor bei fehlerfreier Anlage bestimmten Ist-Wert abgeleiteten Soll-Wert kleiner ist als ein vorgegebener Schwellwert.

6. Verfahren nach Anspruch 5, **dadurch gekennzeichnet, dass** der Soll-Wert der Null-Wert ist.

7. Verfahren nach Anspruch 5, **dadurch gekennzeichnet, dass** der Soll-Wert aus dem Null-Wert und zumindest einem zuvor bei fehlerfreier Anlage bestimmten Ist-Wert abgeleitet wird.

8. Werkzeugmaschine mit einer Werkzeugspindel (12), in die ein Werkzeughalter (18, 33), vorzugsweise ein SK- oder HSK-Werkzeughalter (33), mittels einer axial verstellbaren Spannstange (27) eingezogen wird, und einer Ablaufsteuerung (52) für den Betrieb der Werkzeugmaschine (10), wobei an dem Werkzeughalter (33) eine Auflagefläche (38) vorgesehen ist, die bei in die Werkzeugspindel (12) eingespanntem Werkzeughalter (33) mit einer an der Werkzeugspindel (12) vorgesehenen Gegenfläche in Anlage ist, zumindest ein Abstandssensor (56) vorgesehen ist, der die aktuelle axiale Lage der Spannstange (27) abfragt, wobei die Ablaufsteuerung (52) einen von der gemessenen aktuellen axialen Lage der Spannstange (27) abhängigen Ist-Wert ermittelt und verwendet, um eine Aussage über die Anlage zu treffen, und wobei mit der Spannstange (27) eine Meldehülse (48) mit einer radial nach außen weisenden, umlaufenden Mantelfläche (49, 55) verbunden ist, deren axiale Lage über den zumindest einen Abstandssensor (56) abfragbar ist,
**dadurch gekennzeichnet, dass** die Meldehülse (48) eine zylindrische Mantelfläche (55) aufweist und der Abstandssensor (56) seine Überdeckung (58) durch die Mantelfläche (55) misst, so dass in Abhängigkeit von der Überdeckung (58) des Abstandssensors (56) durch die Mantelfläche (55) der Messwert ermittelbar ist.

9. Werkzeugmaschine nach Anspruch 8, **dadurch gekennzeichnet, dass** ein Messsystem (59) vorgesehen ist, das ein von dem eingespannten Werkzeughalter(18, 33) getragenes Bearbeitungswerkzeug (19) vermisst, insbesondere dessen Länge, Lage, Rundlauf, oder mögliches Taumeln.

## Revendications

1. Procédé de surveillance du contact entre une surface d'appui (38) sur un porte-outil (18, 33), de préférence un porte-outil SK ou HSK (33), et une surface d'accouplement (39) sur une broche à outils (12) d'une machine-outil (10), dans lequel ledit porte-outils (18, 33) est attiré dans ladite broche à outils (12) à l'aide d'une mâchoire axialement déplaçable (27), dans laquelle au moins un détecteur de distance (56) est prévu afin de détecter la position axiale actuelle de ladite mâchoire (27), et dans lequel une valeur réelle qui dépend de la position axiale actuelle de ladite mâchoire (27) est déterminée et utilisée afin de faire état dudit contact, dans lequel une bague d'indication (48) ayant une surface de recouvrement circonférentielle (55) pointant radialement vers l'extérieur est reliée à ladite mâchoire (27), la position axiale de ladite bague d'indication (48) étant détectée par ledit détecteur de distance (56), **caractérisé en ce que** ladite bague d'indication (48) possède une surface de recouvrement cylindrique (55), et ladite valeur réelle est déterminée en fonction d'un chevauchement (58) dudit détecteur de distance (56) par ladite surface de recouvrement (55).

2. Procédé selon la revendication 1, **caractérisé en ce qu'**une valeur nulle destinée à une position axiale nulle de ladite mâchoire (27) est déterminée pour chaque porte-outils (18, 33), et **en ce qu'**une évaluation dudit contact est dérivée de ladite valeur nulle et de ladite valeur réelle.

3. Procédé selon la revendication 2, **caractérisé en ce que** ladite valeur nulle est déterminée pour chaque porte-outils respectif (18, 33) dès qu'il est fixé en place dans ladite machine-outil (10) avec un contact parfait.

4. Procédé selon la revendication 3, **caractérisé en ce que**, afin de déterminer ladite valeur nulle, ledit contact parfait est déterminé via un système de mesure (59) qui contrôle un outil de découpe (19), porté par ledit porte-outils fixé, et en particulier sa longueur, sa position, sa concentricité, ou son éventuel vacillement.

5. Procédé selon l'une quelconque des revendications 2 à 4, **caractérisé en ce qu'**un contact est évalué comme étant parfait si la différence entre ladite valeur réelle et une valeur nominale dérivée de ladite valeur nulle et/ou d'une valeur réelle déterminée à l'avance au cours dudit contact parfait est inférieure à une valeur de seuil prédéterminée.

6. Procédé selon la revendication 5, **caractérisé en ce que** ladite valeur nominale est ladite valeur nulle.

7. Procédé selon la revendication 5, **caractérisé en ce que** ladite valeur nominale est dérivée de ladite valeur nulle et d'au moins une valeur réelle déterminée à l'avance pendant ledit contact parfait.

8. Machine-outil qui comprend une broche à outils (12), dans laquelle un porte-outils (18, 33), de préférence un porte-outils SK ou HSK (33) est attiré à l'aide d'une mâchoire axialement déplaçable (27), et une commande séquentielle (52) destinée à faire fonctionner ladite machine-outil (10), dans laquelle une surface d'appui (38) est prévue sur ledit porte-outils (33), et ladite surface d'appui (38), lorsque ledit porte-outils (33) est fixé dans ladite broche à outils (12), est en contact avec une surface d'accouplement prévue sur ladite broche à outils (12), et au moins un détecteur de distance (56) est prévu afin de détecter la position axiale actuelle de ladite mâchoire (27), dans laquelle une valeur réelle qui dépend de la position axiale actuelle mesurée de ladite mâchoire (27) est déterminée et utilisée par ladite commande séquentielle (52) afin de faire état dudit le contact, et dans laquelle une bague d'indication (48) ayant une surface de recouvrement circonférentielle (55) pointant radialement vers l'extérieur est reliée à ladite mâchoire (27), la position axiale de ladite bague d'indication (48) pouvant être détectée par ledit détecteur de distance (56),
**caractérisée en ce que** ladite bague d'indication (48) possède une surface de recouvrement cylindrique (55), et ledit détecteur de distance (56) mesure son chevauchement (58) par ladite surface de recouvrement (55), de sorte que la valeur mesurée puisse être déterminée en fonction dudit chevauchement (58) entre ledit détecteur de distance (56) et ladite surface de recouvrement (55).

9. Machine-outil selon la revendication 8, **caractérisée en ce qu'**un système de mesure (59) est prévu afin de mesurer une machine-outil (19) portée par ledit porte-outils fixé (18, 33), et en particulier sa longueur, sa position, sa concentricité ou son éventuel vacillement.
